(19) Europäisches Patentamt
European Patent Office
Office européen des brevets

(11) **EP 1 246 452 B1**

(12) **EUROPÄISCHE PATENTSCHRIFT**

(45) Veröffentlichungstag und Bekanntmachung des Hinweises auf die Patenterteilung:
**05.01.2011  Patentblatt 2011/01**

(51) Int Cl.:
*H04N 5/208* (2006.01)   *H04N 5/14* (2006.01)

(21) Anmeldenummer: **02005789.9**

(22) Anmeldetag: **13.03.2002**

(54) **Verfahren und Vorrichtung zur Versteilerung von Signalübergängen bei Fernsehbildern**

Method and device for steepening signal transitions in television pictures

Méthode et dispositif de raidissement des transitions de signal dans des images de télévision

(84) Benannte Vertragsstaaten:
**DE FR GB IT NL**

(30) Priorität: **26.03.2001  DE 10114813**

(43) Veröffentlichungstag der Anmeldung:
**02.10.2002  Patentblatt 2002/40**

(73) Patentinhaber: **Trident Microsystems (Far East) Ltd.**
**Grand Cayman (KY)**

(72) Erfinder:
• **Rieder, Peter**
**81737 München (DE)**
• **Hahn, Marko**
**81373 München (DE)**

• **Scheffler, Günter**
**80939 München (DE)**
• **Wendel, Dirk**
**82008 Unterhaching (DE)**

(74) Vertreter: **Epping - Hermann - Fischer**
**Patentanwaltsgesellschaft mbH**
**Ridlerstrasse 55**
**80339 München (DE)**

(56) Entgegenhaltungen:
**EP-A- 0 472 782    EP-A- 0 558 017**
**EP-A- 0 901 103**

• **PATENT ABSTRACTS OF JAPAN vol. 010, no. 057 (P-434), 7. März 1986 (1986-03-07) & JP 60 201484 A (FUJITSU KK), 11. Oktober 1985 (1985-10-11)**

**Beschreibung**

Die vorliegende Erfindung betrifft ein Verfahren und eine Vorrichtung zur Verbesserung des Schärfeeindrucks eines Fernsehbildes, das aus wenigstens einem Fernsehsignal gebildet ist.

Ein herkömmliches Farbfernsehbild wird aus einem Luminanzsignal, das Helligkeitsinformationen enthält, und zwei Chrominanzsignalen, die Farbinformationen enthalten, gebildet, die im folgenden allgemein als Bildsignale bezeichnet werden.

Die Übertragungsbandbreite des Luminanzsignals und der Chrominanzsignale ist festgelegt, wobei die Bandbreite der Chrominanzsignale geringer als die des Luminanzsignals ist. Diese Bandbreitenbegrenzung verringert die Schärfe des Fernsehbildes. Die Farb- und Helligkeitsinformationen liegen zeilenweise in dem jeweiligen Bildsignal vor, das heißt zeitlich aufeinanderfolgende Werte der Bildsignale enthalten die Helligkeits- oder Farbinformationen der in einer Zeile des Fernsehbildes aufeinanderfolgenden Bildpunkte (Pixel). Ein Helligkeitswechsel oder ein Farbwechsel zwischen benachbarten Pixeln einer Zeile resultiert aus einem zeitlichen Ansteigen oder Absinken der Amplitude des jeweiligen Bildsignals. Die Bandbegrenzung bei der Übertragung der Bildsignale begrenzt dabei die Steilheit der Flanken der Bildsignale, so dass keine beliebigen Farb- oder Helligkeitsunterschiede zwischen benachbarten Pixeln darstellbar sind. Besonders deutlich wird diese Bandbegrenzung an sogenannten Farb- oder Helligkeitskanten in einem Bild, an denen der Helligkeits- oder Farb-übergang kontinuierlich und nicht wie gewünscht abrupt verläuft. Der Übergang an den Farbkanten erfolgt aufgrund der geringeren Bandbreite der Chrominanzsignale langsamer, das heißt er erstreckt sich über eine größere Anzahl von benachbarten Pixeln, als der Übergang an Helligkeitskanten.

Zur Versteilerung der Flanken der Bildsignale ist es bekannt, die Bildsignale mittels eines sogenannten "Peaking-Filters" zu filtern. Durch das Peaking-Filter werden hohe Frequenzanteile der Bildsignale in ihrer Amplitude angehoben, was beispielsweise durch Filterung des Bildsignals mittels eines Hochpassfilters oder eines Bandpassfilters und anschließendes Addieren des Bildsignals und des Filterausgangssignals erfolgt.

Problematisch bei der Versteilerung von Signalflanken mittels Peaking-Verfahren ist, dass vor und nach Flanken des Ausgangssignals des Peaking-Filters Überschwinger oder Unterschwinger auftreten, die die Helligkeit oder Farbe von Bildpunkten vor und nach Helligkeits- oder Farbkanten verfälschen.

Die europäische Patentanmeldung 0 224 302 A1 beschreibt eine Schaltungsanordnung zur Erhöhung der Schärfe von Farbkanten, wobei die Schaltungsanordnung die Steilheit des Chrominanzsignals ermittelt und bei Überschreiten eines vorgegebenen Steilheitswertes eine Versteilerungsschaltung ansteuert, die ein Chrominanzsignal mit einer versteilerten Flanke erzeugt.

Die europäische Patentanmeldung 0 457 931 A1 beschreibt eine Vorrichtung und ein Verfahren zur Farbkantenverbesserung. Dabei werden Wendepunkte in einem Chrominanzsignal ermittelt. Bei Vorliegen eines Wendepunktes wird bei dem bekannten Verfahren eine Flanke im Bereich dieses Wendepunktes durch eine steilere Flanke ersetzt.

Die EP 0 558 017 A2 beschreibt ein Verfahren zur Verbesserung der Kantenschärfe in einem aus einem Fernsehsignal gebildeten Bild. Bei diesem Verfahren ist vorgesehen, zu einer Folge von Signalwerten einen Minimalwert und einen Maximalwert zu ermitteln, einen Mittelwert aus dem Minimalwert und dem Maximalwert zu berechnen und eine gewichtete Differenz zwischen dem Mittelwert und einem ausgewählten Signalwert der Folge zu dem ausgewählten Signalwert hinzu zu addieren, um einen gefilterten Signalwert zu erhalten.

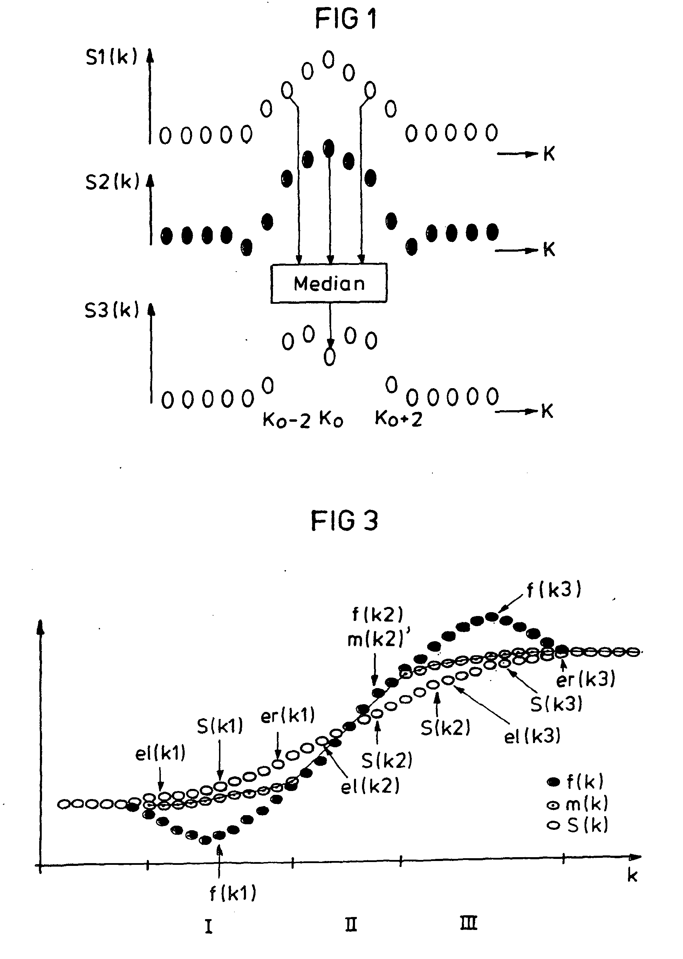

Aus Ohara, Kunzmann: "Video Processing Technique for Multimedia HDTV with Digital Micro-Mirror Array", IEEE Transactions on Consumer Electronics, 8-99, Vol. 45, Nr. 3, S. 604ff. ist ein Verfahren zur digitalen Bearbeitung eines Bildsignals bekannt, bei dem aus dem analogen Bildsignal zunächst ein zeitdiskretes Bildsignal und eine zu dem zeitdiskreten Bildsignal korrespondierenden mittels eines digitalen Peaking-Filters gewonnenes Signal ermittelt wird. Dabei wird zu jedem Signalwert des Bildsignals ein "linker" Signalwert, der eine vorgegebene Anzahl von Stellen vor dem Signalwert liegt, und ein "rechter" Signalwert, der eine vorgegebene Anzahl von Stellen nach dem Signalwert liegt, und der zu dem Signalwert korrespondierende Peaking-Signalwert betrachtet. Liegt der Peaking-Signalwert dabei innerhalb eines durch den linken Signalwert und den rechten Signalwert bestimmten Intervalls, so wird der Peaking-Signalwert als Bildsignalwert ausgegeben. Liegt der Peaking-Signalwert außerhalb dieses Intervalls, so wird der linke Signalwert oder der rechte Signalwert als Bildsignalwert ausgegeben. Dieses Verfahren, bei dem die Positionen der Grenzwerte des Intervalls für den Vergleich mit dem Peaking-Signalwert fest vorgegeben sind, kann insbesondere bei Signalverläufen zu Problemen führen, bei denen das Signal oszillierend verläuft, wie in Figur 1 dargestellt ist. Figur 1a zeigt den Verlauf eines zeitdiskreten Bildsignals $s1(k)$, das durch Abtastung eines kontinuierlichen Signals gewonnen wurde, Figur 1b den Verlauf eines zugehörigen Peaking-Signals $s2(k)$ und Figur 1c ein aus dem bekannten Verfahren resultierendes Bildsignal $s3(k)$.

Zur Bildung eines modifizierten Bildsignalwertes $s3(k_0)$ werden der zugehörige Peaking-Signalwert $s2(k_0)$ und ein linker Bildsignalwert $s1(k_0-2)$, der in dem Beispiel zwei Signalwerte zeitlich vor dem Signalwert $s1(k_0)$ liegt, und ein rechter Signalwert $s1(k_0)$, der zwei Werte zeitlich nach dem Bildsignalwert $s1(k_0)$ liegt, miteinander verglichen. Der Peaking-Signalwert $s2(k_0)$ liegt bei dem Signalverlauf nach dem Beispiel außerhalb eines durch die linken und rechten Bildsignalwerte $s1(k_0-2)$ und $s1(k_0+2)$ vorgegebenen Intervalls, so dass als modifizierter Bildsignalwert $s3(k_0)$ der Inter-

vallgrenzwert $s1(k_0-2)$ oder $s1(k_0+2)$ ausgegeben wird, der näher an dem Peaking-Signalwert $s2(k_0)$ liegt. Bei dem vorangehenden Bildsignalwert $s1(k_0-1)$ und dem nachfolgenden Bildsignalwert $s1(k_0-1)$ liegt der zugehörige Peaking-Signalwert $s2(k_0-1)$ bzw. $s2(k_0+1)$ innerhalb des durch die Grenzwerte $s1(k_0-3)$ und $s1(k_0+1)$ bzw. $s1(k_0-1)$ und $s1(k_0+3)$ vorgegebenen Intervalls, so dass als zugehöriger Bildsignalwert $s3(k_0-1)$ und $s3(k_0+1)$ der Peaking-Signalwert $s2(k_0-1)$ und $s2(k_0+1)$ ausgewählt wird. Die Auswahl der Peaking-Signalwerte $s2(k_0-1)$ und $s2(k_0+1)$ als Bildsignalwerte $s3(k_0-1)$ und $s3(k_0+1)$ und des Signalwertes $s1(k_0-2)$ oder $s1(k_0-2)$ als Signalwert $s3(k_0)$ führt zu einem unerwünschten "Einbruch" des Bildsignalwertes $s3(k_0)$ gegenüber den Nachbarwerten.

Der vorliegenden Erfindung liegt die Aufgabe zugrunde, ein verbessertes Verfahren zur Steigerung des Kontrastes eines Fernsehbildes, das aus wenigstens einem Bildsignal gebildet ist, zur Verfügung zu stellen.

Diese Aufgabe wird durch ein Verfahren gemäß den Merkmalen des Anspruchs 1 gelöst.

Gemäß dem erfindungsgemäßen Verfahren wird aus einem analogen Bildsignal, ein zeitdiskretes Bildsignal gebildet, das eine Abfolge von Bildsignalwerten aufweist, und das beispielsweise durch Abtastung des Bildsignals in gleichmäßigen Zeitabständen gebildet wird, wobei ein Bildsignal im Zusammenhang mit der vorliegenden Erfindung ein Luminanzsignal oder ein Chrominanzsignal sein kann. Zu dem zeitdiskreten Bildsignal wird ein zeitdiskretes Filtersignal, insbesondere ein sogenanntes "Peaking-Signal" gebildet, das eine Abfolge von Peaking-Signalwerten aufweist, von denen jeweils ein Wert zu einem Signalwert des diskreten Bildsignals gehört. Das diskrete Peaking-Signal wird mittels eines digitalen Peaking-Filters aus dem diskreten Bildsignal oder mittels eines analogen Peaking-Filters aus dem analogen Bildsignal bei nachfolgender Abtastung des analogen Peaking-Signals gebildet. Das Peaking-Filter ist dazu ausgebildet, ausgewählte Frequenzanteile des Bildsignals in der Amplitude anzuheben.

Aus dem diskreten Bildsignal und dem Peaking-Signal wird ein modifiziertes diskretes Bildsignal gebildet, das anschließend mittels eines Digital-Analog-Wandlers in ein analoges Bildsignal zur Erzeugung eines Fernsehbildes umgewandelt oder digital gespeichert werden kann. Zur Erzeugung eines Signalwertes des modifizierten Bildsignals ist bei dem erfindungsgemäßen Verfahren vorgesehen, einen Bildsignalwert auszuwählen und wenigstens ein lokales Extremum einer Folge von aufeinanderfolgenden Bildsignalwerten zu ermitteln, wobei diese Folge von aufeinanderfolgenden Bildsignalwerten den ausgewählten Bildsignalwert enthält. Der Bildsignalwert des modifizierten Bildsignals wird bei dem erfindungsgemäßen Verfahren abhängig von dem ermittelten wenigstens einen lokalen Extremum bestimmt.

Das Verfahren sieht vor, den ausgewählten Bildsignalwert als modifizierten Bildsignalwert auszugeben, wenn der Bildsignalwert ein lokales Extremum darstellt. Stellt der ausgewählte Bildsignalwert kein lokales Extremum dar, wird ausgehend von dem ausgewählten Bildsignalwert ein erstes lokales Extremum und ein zweites lokales Extremum ermittelt. Das erste lokale Extremum ist dabei das lokale Extremum einer Folge von aufeinanderfolgenden Bildsignalwerten, die (zeitlich) vor dem ausgewählten Bildsignalwert liegen, und das zweite lokale Extremum ist das lokale Extremum einer Folge von aufeinanderfolgenden Bildsignalwerten, die (zeitlich) nach dem ausgewählten Bildsignalwert liegen. Befindet sich der zu dem ausgewählten Bildsignalwert korrespondierende Peaking-Signalwert innerhalb eines durch das erste und zweite lokale Extremum vorgegebenen Intervalls, so wird der Peaking-Signalwert als modifizierter Bildsignalwert ausgegeben. Liegt der korrespondierende Peaking-Signalwert außerhalb des durch die lokalen Extrema vorgegebenen Intervalls, so wird dasjenige lokale Extremum als modifizierter Bildsignalwert ausgegeben, dessen betragsmäßiger Abstand zu dem Peaking-Signalwert geringer ist.

Die Länge der Folge, innerhalb derer das erste lokale Extremum und das zweite lokale Extremum ermittelt worden ist, ist vorzugsweise begrenzt. Gemäß einer Ausführungsform ist vorgesehen, dass die Folge der Bildsignalwerte vor dem ausgewählten Bildsignalwert, innerhalb derer das erste lokale Extremum ermittelt wird, genau so viele Werte aufweist wie die Folge von Bildsignalwerten nach dem ausgewählten Bildsignalwert, innerhalb derer das zweite lokale Extremum ermittelt wird.

Um zu jedem Bildsignalwert einen modifizierten Bildsignalwert zur Verfügung zu stellen werden diese Verfahrensschritte, nämlich Auswählen des jeweiligen Bildsignalwerts, Ermitteln wenigstens eines lokalen Extremums und eines modifizierten Bildsignalwerts abhängig von dem lokalen Extremum für alle Bildsignalwerte durchgeführt.

Eine Vorrichtung zur Durchführung des erfindungsgemäßen Verfahrens ist Gegenstand der Ansprüche 8 und 9.

Diese Vorrichtung weist eine Abtasteinrichtung zur Bereitstellung eines zeitdiskreten Fernsehsignals aus dem Fernsehsignal, eine Speicheranordnung zur Speicherung einer Folge aufeinanderfolgender Fernsehsignalwerte, eine Filteranordnung zur Bereitstellung eines Filtersignals aus dem zeitdiskreten Fernsehsignal, eine Anordnung zur Ermittlung wenigstens eines Extremums der gespeicherten Folge von Fernsehsignalwerten und eine Anordnung zum Bereitstellen eines modifizierten Fernsehsignalwertes abhängig von dem wenigstens einen ermittelten Extremum auf.

Vorzugsweise weist die Anordnung zur Ermittlung des wenigstens einen Extremums eine Anordnung zur Ermittlung der relativen Position des wenigstens einen Extremums gegenüber dem ausgewählten Fernsehsignalwert und wenigstens einen Multiplexer, dem die Position des wenigstens einen Extremums und die gespeicherten Fernsehsignalwerte zugeführt sind, auf.

Die vorliegende Erfindung wird nachfolgend in Ausführungsbeispielen anhand von Figuren näher erläutert. In den Figuren zeigt

Figur 2     eine schematische Darstellung einer erfindungsgemä- ßen Vorrichtung zur Erzeugung eines modifizierten Bildsignals,

Figur 3     eine Darstellung eines diskreten Bildsignals s(k), eines Peaking-Signals f(k) und eines aus dem Bild- signal und dem Peaking-Signal gebildeten modifi- zierten Bildsignals m(k),

Figur 4     eine Darstellung einer erfindungsgemäßen Vorrich- tung zur Erzeugung eines modifizierten Bildsignal- wertes m(x) zu einem ausgewählten Bildsignalwert s(x),

Figur 5     ein Flussdiagramm zur Veranschaulichung der Verfahrensabläufe bei der Ermittlung lokaler Extrema,

Figur 6     ausgewählte Signalverläufe eines Bildsignals zur Erläuterung der Ermittlung lokaler Extrema,

Figur 7     Ausgewählte Signalverläufe, bei denen ein lokales Extremum einer Folge von Bildsignalwerten vorliegt, die dem ausgewählten Bildsignalpunkt vorausgeht,

Figur 8     Ausgewählte Signalverläufe, bei denen ein lokales Extremum einer Folge von Bildsignalwerten vorliegt, die dem ausgewählten Bildsignalpunkt nachfolgt,

Figur 9     ausgewählte Ausschnitte von Signalverläufen eines Bildsignals, zur Erläuterung der Ermittlung lokaler Extrema,

Figur 10     ein Flussdiagramm zur Veranschaulichung von Verfahrensschritten zur Ermittlung der Bildsignalwerte des modifizierten Bildsignals aus den lokalen Extrema, dem Peaking-Signalwert und dem ausgewählten Bildsignalwert,

Figur 11     eine Darstellung einer weiteren erfindungsgemäßen Vorrichtung zur Erzeugung eines modifizierten Bild- signalwertes m(x) zu einem ausgewählten Bildsignal- wert s(x).

In den Figuren bezeichnen, sofern nicht anders angegeben gleiche Bezugszeichen gleiche Teile und Signale mit gleicher Bedeutung.

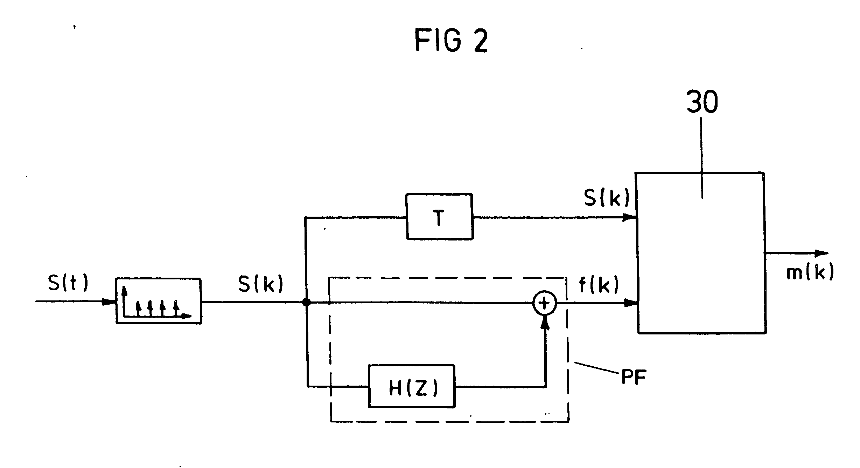

Figur 2 veranschaulicht prinzipiell den Aufbau einer Vorrichtung zur Durchführung des erfindungsgemäßen Verfahrens mit dem Ziel der Kantenversteilerung eines aus wenigstens einem Bildsignal gebildeten Fernsehbild. Der Vorrichtung wird ein Bildsignal s(t) zugeführt, aus welchem mittels Abtastung ein diskretes Bildsignal s'(k) gebildet wird. Das diskrete Bildsignal s'(k) wird einen Peaking-Filter PF zugeführt, an dessen Ausgang ein Peaking-Signal f(k) zur Verfügung steht. Das Peaking-Signal f(k) geht aus dem diskreten Bildsignal s'(k) durch Anheben ausgewählter Frequenzanteile hervor, wobei das Peaking-Filter PF ein Bandpassfilter oder ein Hochpassfilter mit einer Übertragungsfunktion H(z) aufweist, dem das diskrete Bildsignal s'(k) zugeführt ist. In dem Peaking-Filter PF wird in dem Beispiel ein Ausgangssignal des Bandpass- oder Hochpassfilters wobei ein Filterausgangssignal zu dem Bildsignal s'(k) addiert, um das Peaking-Signals f(k) zu bilden. Das Peaking-Signal f(k) und das diskrete Bildsignal s(k) werden einer Auswerteeinheit 30 zugeführt, die ein modifiziertes diskretes Bildsignal m(k) zur Verfügung stellt. Das Peaking-Signal f(k) weist zu jedem Signalwert des Bildsignals s(k) einen korrespondierenden Signalwert auf, wobei das am Ausgang des Abtastglieds anliegende Bildsignal s'(k) mittels eines Verzögerungsgliedes T verzögert wird, bevor es der Verarbeitungseinheit 30 zugeführt wird, um auf diese Weise Laufzeiten des Peaking-Filters PF auszugleichen, so dass der Verarbeitungseinheit 30 jeweils gleichzeitig ein Signalwert des Bildsignals s(k) und ein dazu korrespondierender Signalwert des Peaking-Signals f(k) zugeführt werden.
Neben dem in Figur 2 dargestellten einfach aufgebauten Peaking-Filters können beliebige weitere bekannte Filter eingesetzt werden, bei denen ausgewählte Frequenzanteile eines Eingangssignals verstärkt werden.
Figur 3 zeigt beispielhaft den Verlauf eines diskreten Bildsignals s(k) und des zugehörigen Peaking-Signals f (k) aufgetragen über der diskreten Zählvariable k. Figur 3 macht deutlich, dass das Peaking-Signal f(k) in dem Bereich, in dem das Bildsignal s(k) langsam ansteigt, wesentlich steiler ansteigt, was den Schärfeeindruck eines aus dem Peaking- Signal f(k) resultierenden Bildes gegenüber einem aus dem Bildsignal s(k) resultierenden Bildes steigert. Allerdings zeigt das Peaking-Signal f(k) vor dem Anstieg ein Unterschwingen und nach dem Anstieg ein Überschwingen, was zu einer Verfälschung bei der Wiedergabe der Helligkeit oder der Farbe des Fernsehbildes führt. Das diskrete Bildsignal s(k) ist, wie bereits ausgeführt, durch Abtastung entweder aus einem Luminanzsignal oder aus einem Chrominanzsignal erzeugt.
Bei dem erfindungsgemäßen Verfahren wird ein modifiziertes Bildsignal s(k), das in Figur 3 alle Punkte umfasst, die durch die Linie miteinander verbunden sind, aus dem Bildsignal s(k) und dem Peaking-Signal f(k) gebildet. Bei der Darstellung gemäß Figur 3 wird der Bereich des steilen Anstieges des Peaking-Signals f(k) als modifiziertes Bildsignal m(k) übernommen und die Über- und Unterschwingungen des Peaking-Signals f(k) werden bei der Bildung des modifizierten Bildsignals abgeschnitten.

Dies wird bei dem erfindungsgemäßen Verfahren dadurch erreicht, dass aufeinanderfolgend jeder Signalwert des Bildsignals s(k) ausgewählt wird, wobei zu einer Folge aufeinanderfolgender Bildsignalwerte, die den ausgewählten Signalwert enthalten, wenigstens ein lokales Extremum ermittelt wird. Stellt der ausgewählte Bildsignalwert selbst das lokale Extremum dar, so wird der ausgewählte Bildsignalwert als modifizierter Bildsignalwert ausgegeben. Stellt der ausgewählte Bildsignalwert kein lokales Extremum dar, so werden zu dem ausgewählten Bildsignalwert ein erstes lokales Extremum und ein zweites lokales Extremum ermittelt, wobei das erste lokale Extremum aus den Bildsignalwerten ermittelt wird, die vor dem ausgewählten Bildsignalwert liegen, und wobei das zweite lokale Extremum aus den Bildsignalwerten ermittelt wird, die nach dem ausgewählten Bildsignalwert liegen. Liegt der zu dem ausgewählten Bildsignalwert korrespondierende Peaking-Signalwert innerhalb eines durch das erste lokale Extremum und das zweite lokale Extremum gebildeten Intervalls, so wird als modifizierter Bildsignalwert der korrespondierende Peaking-Signalwert ausgegeben. Liegt der korrespondierende Peaking-Signalwert außerhalb dieses durch die lokalen Extrema vorgegebenen Intervalls, so wird ermittelt, welches der beiden lokalen Extrema betragsmäßig näher an dem korrespondierenden Peaking-Signalwert liegt und dieses lokale Extrema wird dann als modifizierter Bildsignalwert ausgegeben.

Der in Figur 3 dargestellte Verlauf des modifizierten Bildsignal m(k) lässt sich in drei Abschnitte I, II, III unterteilen, wobei das erfindungsgemäße Verfahren für jeden dieser Abschnitte anhand eines ausgewählten Signalpunktes erläutert wird. In Abschnitt I sind ein Bildsignalwert s(k1) und ein dazu korrespondierender Peaking-Signalwert f(k1) markiert. Der Bildsignalwert s(k1) stellt in diesem Fall kein lokales Extremum dar, da das Bildsignal s(k) im Bereich dieses Bildsignalwertes s(k1) stetig ansteigt. Daher wird ausgehend von dem Bildsignalwert s(k1) ein erstes lokales Extremum el(k1) aus einer Folge von Bildsignalwerten ermittelt, die vor dem Bildsignalwert s(k1) liegen. Die Anzahl der Werte dieser Folge ist in dem Ausführungsbeispiel gemäß Figur 3 auf vier begrenzt. Das lokale Extremum el(k1) dieser stetig ansteigenden Folge wird somit durch den Bildsignalwert s(k1-4) gebildet. In entsprechender Weise wird ein lokales Extremum einer Folge von Bildsignalwerten, die vor dem Signalwert s(k1) liegen, durch den Bildsignalwert s(k1+4) gebildet. Der korrespondierende Peaking-Signalwert f(k1) ist kleiner als das erste Extremum el(k1) und kleiner als das zweite Extremum er(k1) und liegt somit nicht innerhalb eines durch diese beiden lokalen Extrema el(k1) und er(k1) gebildeten Intervalls. Der Amplitudenwert des Peaking-Signalwerts f(k1) liegt betragsmäßig näher an dem ersten lokalen Extremum el(k1), so dass als modifizierter Bildsignalwert m(k1) der Wert des ersten lokalen Extremum el(k1) ausgegeben wird.

Da in der zeitlichen Abfolge der Signalwerte das erste lokale Extremum el(k1) links von dem Bildsignalwert s(k1) liegt, wird dieses Extremum im folgenden als linkes lokales Extremum bezeichnet und dementsprechend wird das zweite lokale Extremum im folgenden als rechtes lokales Extremum bezeichnet.

In dem Abschnitt II ist ein Bildsignalwert s(k2) und dessen zugehöriger korrespondierender Peaking-Signalwert f(k2) markiert. Ein linkes Extremum el(k2) zu diesem Bildsignalwert s(k2) wird durch den Bildsignalwert s(k2-4) gebildet, und ein rechtes lokales Extremum er(k2) wird durch den Bildsignalwert s(k2+4) gebildet. Der korrespondierende Peaking-Signalwert f(k2) liegt innerhalb des durch die lokalen Extrema el(k2) und er(k2) gebildeten Intervalls, so dass als modifizierter Bildsignalwert m(k2) der Peaking-Signalwert f(k2) ausgegeben wird.

Im Abschnitt III ist ein Bildsignalwert S(k3) und dessen zugehöriger korrespondierender Peaking-Signalwert f(k3) markiert. Das rechte lokale Extremum er(k3) zu diesem Bildsignalwert s(k3) wird durch den Bildsignalwert s(k3+4) gebildet, und das linke lokale Extremum el(k3) wird zu diesem Bildsignalwert s(k3) durch den Bildsignalwert s(k3-4) gebildet. Der korrespondierhände Peaking-Signalwert f(k3) liegt außerhalb des durch die lokalen Extrema el(k3) und er(k3) gebildeten Intervalls. Als modifizierter Bildsignalwert m(k3) wird der Wert des rechten lokalen Extremums er(k3) ausgegeben, da das rechte lokale Extremum näher an dem korrespondierenden Peaking-Signalwert f(k3) liegt.

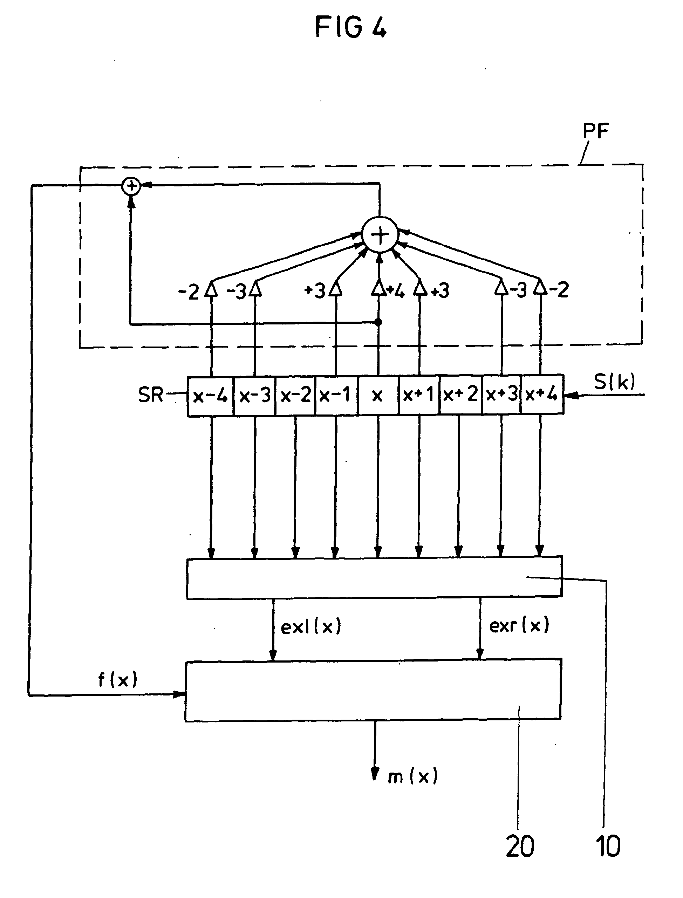

Figur 4 zeigt schematisch eine Anordnung zur Ermittlung eines modifizierten Bildsignalwertes m(x) (die Variable x steht im folgenden für einen beliebigen Wert der diskreten Zählvariable) aus einer Folge von Werten des Bildsignals s(k). Die Anordnung weist ein Schieberegister SR auf, in dem in dem Ausführungsbeispiel neun aufeinanderfolgende Bildsignalwerte s(x-4), s(x-3), s(x-2), s(x-1), s(x), s(x+1), s(x+2), s(x+3), s(x+4) gespeichert sind. Der ausgegebene modifizierte Bildsignalwert m(x) ist dabei der zu dem Bildsignalwert s(x) ausgegebene Signalwert.

Die oberhalb des Schieberegisters dargestellte Struktur zeigt das digitale Peaking-Filter, für dessen Übertragungsfunktion P(z) gilt:

P(z) = 1 + H(z), wobei für H(z) in dem dargestellten Ausführungsbeispiel gilt:

$$H(z) = -2z^{-4} - 3z^{-3} + 3z^{-1} + 4z^0 + 3z^1 - 3z^3 - 2z^4$$

Zu jedem Signalwert s(x) des Bildsignals s(k) steht am Ausgang des Peaking-Filters ein korrespondierender Peaking-Signalwert f(x) zur Verfügung.

Die in dem Schieberegister SR gespeicherten Werte des Bildsignals s(k) sind einer Einheit 10 zur Ermittlung rechter und linker lokaler Extrema el(x) und er(x) zugeführt, wobei diese Extrema el(x), er(x) an einem Ausgang der Einheit 10 zur Verfügung stehen und einer Einheit 20 zur Bildung des modifizierten Bildsignalwertes m(x) aus den lokalen Extremwerten el(x), er(x) und dem Peaking-Signalwert f(x) zugeführt sind.

Ein wesentlicher Bestandteil des erfindungsgemäßen Verfahrens ist die Ermittlung der lokalen Extremwerte zu jedem Bildsignalwert s (x) des Bildsignals s(k).

Diese Ermittlung der lokalen Extremwerte zu einem ausgewählten Bildsignalwert s(x) wird nachfolgend näher erläutert, wobei zu Zwecken der Erläuterung angenommen ist, dass die Länge der Folge von Bildsignalwerten, innerhalb derer die lokalen Extrema ermittelt werden, maximal neun Bildsignalwerte aufweist.

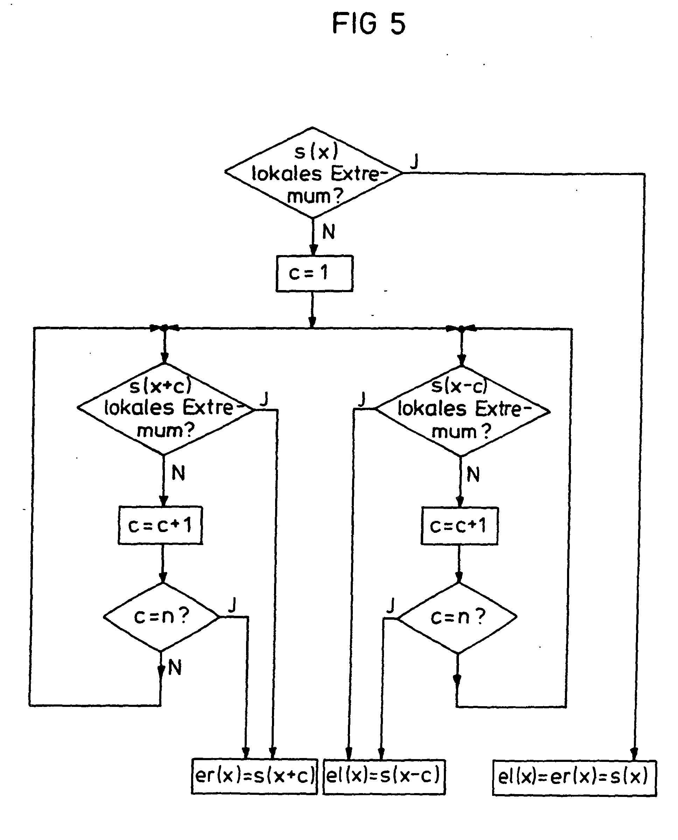

Figur 5 veranschaulicht in Form eines Flussdiagramms den in der Einheit 20 durchgeführten Verfahrensablauf zur Ermittlung der Extremwerte.

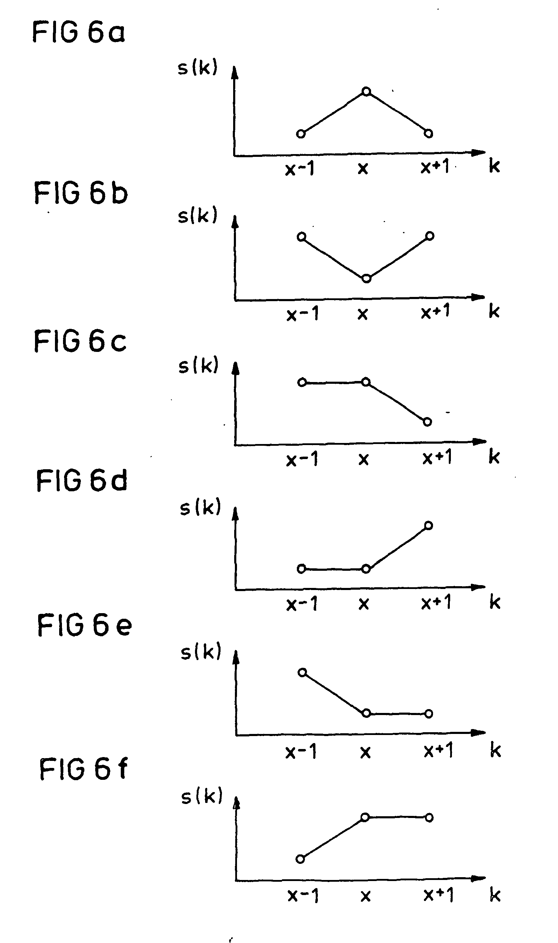

Dabei wird einem ersten Verfahrensschritt ermittelt, ob der ausgewählte Bildsignalwert s(x) ein lokales Extremum darstellt. Figur 6 zeigt die Konstellationen von aufeinanderfolgenden Signalwerten, bei denen der ausgewählte Bildsignalwert s(x) selbst ein lokales Extremum darstellt, nämlich dann,

- wenn s(x) größer als s(x-1) und s(x+1) ist,
- wenn s(x) kleiner als s(x-1) und s(x+1) ist,
- wenn s(x) gleich s(x-1) und größer als s(x+1) ist,
- wenn s(x) gleich s(x-1) und kleiner als s(x+1) ist,
- wenn s(x) gleich s(x+1) und kleiner als s(x-1) ist, oder
- wenn s(x) gleich s(x+1) und größer als s(x-1) ist.

s(x-1) bezeichnet dabei einen vor dem Signalwert s(x) liegenden und s(x+1) einen nach dem Signalwert s(x) liegenden Wert.

Liegt eine dieser Signalkonstellationen vor, so gibt die Einheit 20 als linkes Extremum el(x) und als rechtes Extremum er(x) den Wert des Bildsignalwertes s(x) aus. Andernfalls wird untersucht, ob der rechte Nachbarwert s(x+1) oder der linke Nachbarwert s(x-1) ein lokales Extremum darstellt.

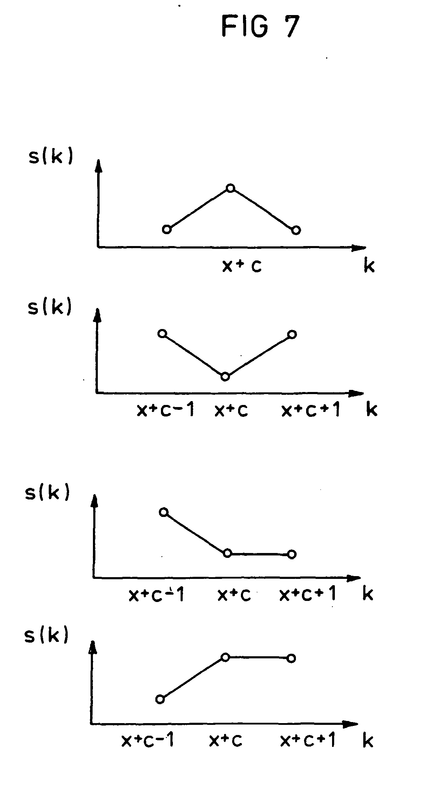

Figur 7 zeigt beispielhaft für einen rechten Nachbarwert s(x+c) des Bildsignalwertes s(x) die Signalkonstellationen, bei denen dieser rechte Nachbarwert s(x+c) ein lokales Extremum darstellt. s(x+c) ist dann ein lokales Extremum,

- wenn s(x+c) größer als sein rechter Nachbarwert s(x+c+1) und als sein linker Nachbarwert s(x-c-1) ist,
- wenn s(x+c) kleiner ist als sein rechter Nachbarwert s(x+c+1) und als sein linker Nachbarwert s(x+c-1),
- wenn s(x+c) gleich seinem rechten Nachbarwert s(x+c) und kleiner als sein linker Nachbarwert s(x+c-1) ist, oder
- wenn s(x+c) gleich seinem rechten Nachbarwert s(x+c+1) und größer als sein linker Nachbarwert s(x+c-1) ist.

Die Ermittlung, ob ein rechter Nachbarwert s(x+c) zu dem Signalwert s(x) ein lokales Extremum darstellt, wird für aufeinanderfolgende rechte Nachbarwerte s(x+c) solange durchgeführt, bis ein lokales Extremum ermittelt wird, oder bis die Grenze des Auswerteintervalls erreicht ist. Dazu wird eine Zählvariable c zu Beginn der Ermittlung des rechten lokalen Extremum auf Eins gesetzt und nach der Überprüfung jedes Signalwertes um Eins erhöht. Es wird so lange für die Werte s(x+c) ermittelt, ob diese ein lokales Extremum darstellen, bis einer der Werte ein lokales Extremum darstellt oder bis die Grenze des Auswerteintervalls erreicht ist, wobei die Variable, welche die Grenze des Auswerteintervalls festlegt, in dem Flussdiagramm gemäß Figur 5 mit n bezeichnet ist, wobei bei der Anordnung gemäß Figur 4 n=4 gilt. Wird für einen rechten Nachbarwert s(x+c) ermittelt, dass dieser ein lokales Extremum darstellt, so wird das rechte Extremum er(x) auf den Wert s(x+c) gesetzt, der das lokale Extremum bildet. In entsprechender Weise wird für linke Nachbarwerte s(x-c) ermittelt, ob diese ein lokales Extremum darstellen und zwar für aufeinander folgende linke Nachbarwerte ausgehend von dem Signalwert s(x) solange, bis ein lokales Extremum ermittelt wurde oder bis die Grenze des Auswerteintervalls erreicht ist, wobei die Grenze des Auswerteintervalls in dem zuvor genannten Beispiel durch den Bildsignalwert s(x-4) festgelegt ist.

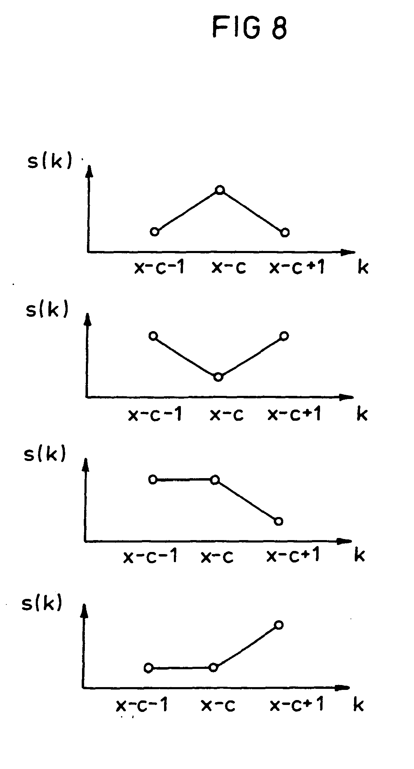

Figur 8 zeigt die Signalkonstellationen, bei denen ein linker Nachbarwert s(x-c) des Bildsignalwertes s(x) ein linkes Extremum darstellt, nämlich dann,

- wenn s(x-c) größer ist als sein linker Nachbarwert s(x-c-1) und sein rechter Nachbarwert s(x-c+1) ist,
- wenn s(x-c) kleiner ist als sein linker Nachbarwert s(x-c-1) und sein rechter Nachbarwert s(x-c+1) ist,
- wenn s(x-c) gleich seinem linken Nachbarwert s(x-c-1) und größer als sein rechter Nachbarwert s(x-c+1) ist, oder
- wenn s(x-c) gleich seinem linken Nachbarwert s(x-c-1) und kleiner als sein rechter Nachbarwert s(x-c+1) ist.

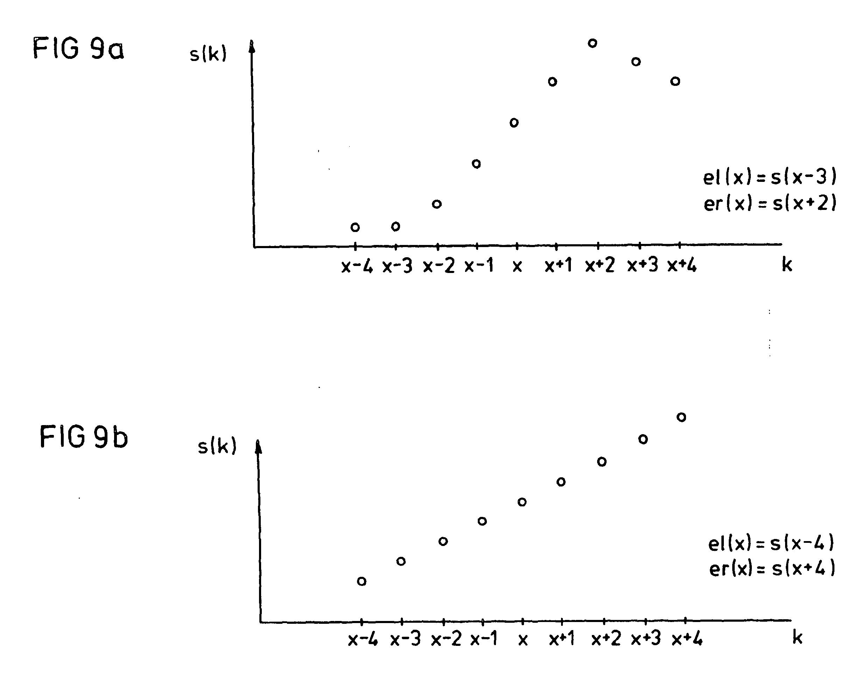

Zur Veranschaulichung des Verfahrens zur Ermittlung lokaler Extrema zeigt Figur 9a eine Folge von Bildsignalwerten s(x-4) ... s(x+4), wobei bei dieser Folge der Signalwert s(x) kein lokales Extremum darstellt. Ausgehend von s(x) wird somit ein rechtes lokales Extremum ermittelt, welche in dem Signalwert s(x+2) gefunden wird und es wird ein linkes lokales Extremum ermittelt, welches in dem Signalwert s(x-3) gefunden wird. Die rechts von s(x+2) liegenden Signalwerte und der links von s(x-3) liegende Signalwert wird bei der Extremwertermittlung nicht mehr berücksichtigt.

Figur 9b zeigt einen Signalverlauf, bei welchem das Signal s(k) zwischen Signalwerten s(x-4) und s(x+4) stetig ansteigt, so dass s(x-4) das linke lokale Extremum und s(x+4) das rechte lokale Extremum bilden.

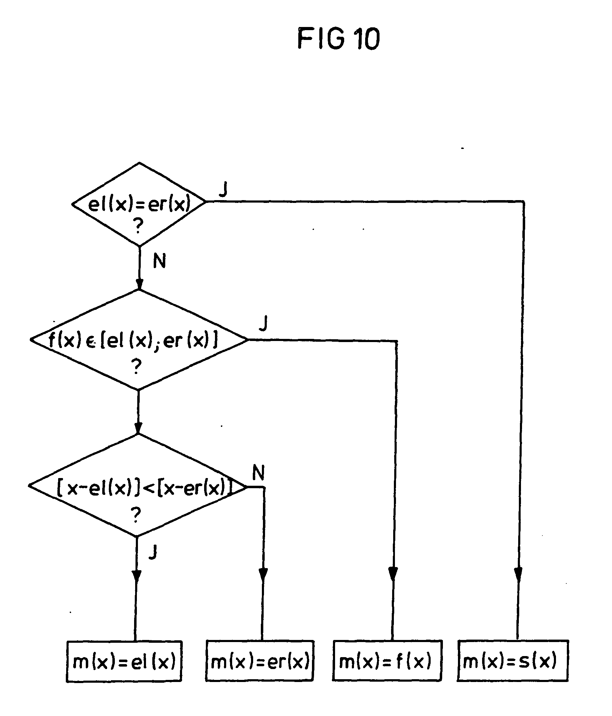

Figur 10 veranschaulicht in einem Flussdiagramm die Funktionsweise der Einheit 20 zur Ermittlung des modifizierten Bildsignalwertes m(x) aus dem lokalen Extrema el(x), er(x) und dem korrespondierenden Peaking-Signalwert f(x). Dabei wird zunächst ermittelt, ob der Wert des linken lokalen Extremums el(x) mit dem Wert des rechten lokalen Extremums er(x) übereinstimmt. Wenn ja, wird angenommen, dass der Bildsignalwert s(x) selbst ein lokales Extremum darstellt, so dass als modifizierter Bildsignalwert m(x) der Bildsignalwert s(x) herangezogen wird. Andernfalls wird in einem nächsten Verfahrensschritt überprüft, ob der korrespondierende Peaking-Signalwert f(x) in einem durch den linken lokalen Extremwert el(x) und den rechten lokalen Extremwert er(x) gebildeten Intervall enthalten ist. Wenn ja, wird der korrespondierende Peaking-Signalwert f(x) als modifizierter Bildsignalwert m(x) ausgegeben. Andernfalls wird die betragsmäßige Differenz zwischen dem Peaking-Signalwert f(x) und dem Wert des linken lokalen Extremum el(x) und die betragsmäßige Differenz zwischen dem Peaking-Signalwert f(x) und dem rechten lokalen Extremum er(x) ermittelt. Ist die Differenz zwischen dem Peaking-Signalwert f(x) und dem linken lokalen Extremum el(x) kleiner als die Differenz zwischen dem Peaking-Signalwert f(x) und dem rechten lokalen Extremum er(x), so wird als modifizierter Filtersignalwert m(x) der Wert des linken lokalen Extremums el(x) ausgegeben. Andernfalls wird der Wert des rechten lokalen Extremums er(x) als modifizierter Filtersignalwert m(x) ausgegeben.

Bei dem zuvor beschriebenen Ausführungsbeispiel des erfindungsgemäßen Verfahrens zur Bildung der modifizierten Bildsignalwerte m(x) werden zur Ermittlung lokaler Extremwerte stets drei aufeinander folgende Bildsignalwerte miteinander verglichen, wobei ein lokales Extremum des ausgewählten Bildsignalwertes s(x) vorliegt, wenn eine der Konstellationen gemäß Figur 6 vorliegt, wobei ein rechtes lokales Extremum eines dem Bildsignalwert s (x) nachfolgenden Wertes s(x+c) vorliegt, wenn eine der Signalkonfigurationen gemäß Figur 7 vorliegt und wobei ein linkes lokales Extremum eines dem Bildsignalwert s(x) vorausgehenden Wertes s(x-c) vorliegt, wenn eine der Signalkonfigurationen gemäß Figur 8 gegeben ist.

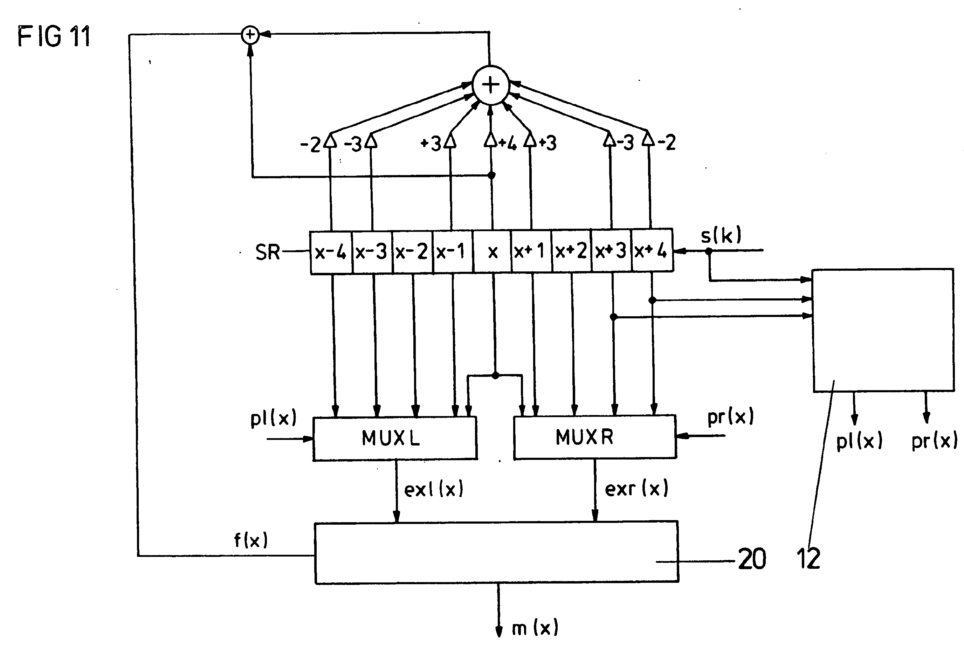

Um einen mehrfachen Vergleich benachbarter Signalwerte zu vermeiden, ist bei einer Anordnung gemäß Figur 11 vorgesehen, die zwei zuletzt in dem Schieberegister SR gespeicherten Signalwerte S(x+3) und S(x+4) mit dem als nächstes in das Schieberegister einlaufenden Wert S(x+5) zu vergleichen und zu ermitteln, ob eine Signalkonfiguration vorliegt, bei der s(x+4) ein lokales Extremum darstellt. Zu den übrigen Signalwerten s(x-4) ... s(x+3), die diesen Vergleich ebenfalls bereits durchlaufen haben, wird in der Einheit 12 abgespeichert, inwieweit s(x) ein lokales Extremum darstellt oder inwieweit einer der Werte s(x-4) bis s(x-1) ein linkes lokales Extremum oder einer der Werte s(x+1) bis s(x+4) ein rechtes lokales Extremum darstellt. Die Einheit 12 gibt dabei zu jedem Wert s(x) die abgespeicherten Positionen der jeweiligen linken lokalen Extrema pl(x) und der rechten lokalen Extrema pr(x) aus, wobei diese Positionswerte pl(x), pl(x) jeweils einem Multiplexer MUXL, MUXR zugeführt sind, wobei am Ausgang eines der Multiplexer das linke lokale Extremum el(x) und am Ausgang des anderen Multiplexers MUXR das rechte lokale Extremum er(x) zur Verfügung steht.

Der Wert f(x) des Peaking-Signals und die rechten und linken Extrema exl(x), exr(x) werden in der Verarbeitungseinheit 20 in der beschriebenen Weise zur Bildung des modifizierten Bildsignals m(x) herangezogen.

Mittels des erfindungsgemäßen Verfahrens wird aus dem Bildsignal ein modifiziertes Bildsignal gebildet, das gegenüber dem Bildsignal versteilerte Flanken aufweist, bei dem vor und nach den Flanken jedoch keine störenden Über- oder Unterschwinger auftreten.

**Patentansprüche**

1. Verfahren zur Versteilerung von Signalübergängen in einem Fernsehbild, das aus wenigstens einem Bildsignal (s (t)) gebildet ist, wobei das Verfahren folgende Merkmale aufweist:

- Erzeugen eines eine Abfolge von Bildsignalwerten aufweisenden zeitdiskreten Bildsignals (s(k)) aus dem Bildsignal (s(t)),
- Erzeugen eines eine Folge von Signalwerten aufweisenden zeitdiskreten Peaking-Filtersignals (f(k)) zu dem zeitdiskreten Bildsignal (s(k)), wobei das zeitdiskrete Peaking-Filtersignal (f(k)) zu den Bildsignalwerten (s(x)) jeweils korrespondierende Signalwerte (f(x)) aufweist,
- Erzeugen eines eine Folge von modifizierten Signalwerten aufweisenden modifizierten Bildsignals (m(k)) aus dem zeitdiskreten Bildsignal (s(k)) und dem Peaking-Filtersignal (f(k)),

**dadurch gekennzeichnet, dass**

die Erzeugung des modifizierten Signalwertes (m(x)) des modifizierten Bildsignals (m(k)) folgende Verfahrensschritte aufweist:

- Auswählen eines Signalwertes (s(x)) des Bildsignals (s(k)),
- Falls der ausgewählte Signalwert (s(x)) ein lokales Extremum darstellt, Ausgeben des ausgewählten Signalwerts (s(x)) als modifiziertem Signalwert (m(x)),
- Falls der ausgewählte Signalwert (s (x)) kein lokales Extremum darstellt,

- Ermitteln

ausgehend von dem ausgewählten Bildsignalwert (s(x)) eines ersten lokalen Extremums (el(x)) aus einer Folge von dem ausgewählten Bildsignalwert vorausgehenden Bildsignalwerten eines zweiten lokalen Extremums (er(x)) einer Folge von dem ausgewählten Fernsehsignalwert nachfolgenden Bildsignalwerten, wobei bestimmt wird, daß der modifizierte Fernsehsignalwert (m(x)) der zu dem ausgewählten Fernsehsignalwert (s(x)) korrespondierende Peaking-Filtersignalwert (f(x)) ist, wenn der Peaking-Filtersignalwert (f(x)) innerhalb eines durch das erste und zweite lokale Extremum (el(x), er(x)) vorgegebenen Intervalls liegt, und daß der modifizierte Fernsehsignalwert (m(x)) der Wert des ersten oder zweiten lokalen Extremums (el(x), er(x)) ist, wenn der Filtersignalwert (f(x)) außerhalb eines durch das erste und zweite lokale Extremum (el(x), er(x)) vorgegebenen Intervalls liegt.

2. Verfahren nach Anspruch 1,
bei dem der modifizierte Fernsehsignalwert (m(x)) der Wert des ersten oder zweiten lokalen Extremums (el(x), er (x)) ist, das betragsmäßig näher an dem korrespondierenden Filtersignalwert (f(x)) liegt.

3. Verfahren nach einem der vorangehenden Ansprüche,
bei dem die Länge der Folgen der Fernsehsignalwerte (s(k)), innerhalb derer das erste und zweite lokale Extremum (el(x), er(x)) ermittelt werden, begrenzt ist.

4. Verfahren nach Anspruch 3, bei dem die Folgen innerhalb derer das erste lokale Extremum (el(x)) und das zweite lokale Extremum (er(x)) ermittelt werden, gleich viele Fernsehsignalwerte aufweisen.

5. Verfahren nach Anspruch 3 oder 4,
bei dem die Folgen, innerhalb derer das erste lokale Extremum (el(x)) und das zweite lokale Extremum (er(x)) ermittelt werden, jeweils vier Fernsehsignalwerte umfassen.

6. Verfahren nach einem der vorangehenden Ansprüche,
bei dem das Filtersignal (f(k)) durch Anheben ausgewählter Frequenzanteile aus dem zeitdiskreten Fernsehsignal (s(k)) gebildet ist.

7. Vorrichtung zur Steigerung der Schärfe eines aus wenigstens einem Bildsignal (s(t)) gebildeten Fernsehbildes, die folgende Merkmale aufweist:

- eine Abtasteinrichtung zur Bereitstellung eines zeitdiskreten Bildsignals (s(k)) aus dem Bildsignal (s(t)),
- eine Speicheranordnung (SR) zur Speicherung einer Folge aufeinanderfolgender Signalwerte (s (x-4)...s (x+4) ) des zeitdiskreten Bildsignals (s(k)),
- eine Filteranordnung (PF) zur Bereitstellung eines zeitdiskreten Peaking-Filtersignals (f(k)) aus dem zeitdiskreten Bildsignal (s(k)),
- eine Anordnung (10; 12, MUXL, MUXR) zur Ermittlung eines ersten und zweiten lokalen Extremums (el(x), er (x)) der gespeicherten Folge von Signalwerten (s(x-4)...s(x+4)) des zeitdiskreten Bildsignals (s(k)),
- eine Anordnung (20) zum Bereitstellen eines modifizierten Signalwertes (m(x)) in Abhängigkeit des ermittelten ersten und zweiten lokalen Extremums (el(x), er(x)) und eines zu einem ausgewählten Signalwert (s(x)) des zeitdiskreten Bildsignals (s(k)) korrespondierenden Signalwertes (f(x)) des zeitdiskreten Peaking-Filtersignals (f(k)) derart, dass

- als modifizierter Signalwert (m(x)) der Signalwert (s(x)) des zeitdiskreten Bildsignals (s(k)) ausgegeben wird, falls der Wert des ersten lokalen Extremums (el(x)) mit dem Wert des zweiten lokalen Extremums (er (x)) übereinstimmt,

- der modifizierte Signalwert (m(x)) aufgrund einer Bewertung des ermittelten ersten und zweiten lokalen Extremums (el(x), er(x)) und des zu dem ausgewählten Signalwert (s(x)) korrespondierenden Signalwertes (f(x)) des zeitdiskreten Peaking-Filtersignals (f(k)) erzeugt wird, falls der Wert des ersten lokalen Extremums (el(x)) mit dem Wert des zweiten lokalen Extremums (er(x)) nicht übereinstimmt.

8. Vorrichtung nach Anspruch 7,
bei dem die Anordnung (12, MUXL, MUXR) zur Ermittlung des ersten und zweiten lokalen Extremums (el(x), er(x)) eine Anordnung (12) zur Ermittlung einer relativen Position (pl(x), pr(x)) des ersten und zweiten lokalen Extremums (el(x), er(x)) gegenüber dem ausgewählten Signalwert (s(x)) des zeitdiskreten Bildsignals (s(k)) und wenigstens einen Multiplexer (MUXL, MUXR), dem die relative Position (pl(x), pr(x)) des ersten und zweiten lokalen Extremums und die gespeicherte Folge aufeinanderfolgender Signalwerte des zeitdiskreten Bildsignals zugeführt sind, aufweist.

**Claims**

1. A method of steepening signal transitions in a television image which is formed of at least one image signal (s(t)), the method comprising the following features:

    - generating, from the image signal (s(t)), a time-discrete image signal (s(k)) comprising a sequence of image signal values,
    - generating a time-discrete peaking filter signal (f(k)) comprising a sequence of signal values with respect to the time-discrete image signal (s(k)), the time-discrete peaking filter signal (f(k)) comprising signal values (f(x)) respectively corresponding to the image signal values (s(x)),
    - generating, from the time-discrete image signal (s(k)) and the peaking filter signal (f(k)), a modified image signal (m(k)) comprising a sequence of modified signal values,

    **characterized in that**
    the generation of the modified signal value (m(x)) of the modified image signal (m(k)) comprises the following steps:

    - selecting a signal value (s(x)) of the image signal (s(k)),
    - if the selected signal value (s(x)) represents a local extremum: outputting the selected signal value (s(x)) as a modified signal value (m(x)),
    - if the selected signal value (s(x)) does not represent a local extremum:

        - determining, starting from the selected image signal value (s(x)), a first local extremum (el(x)) from a sequence of image signal values which are ahead of the selected image signal value, and a second local extremum (er(x)) of a sequence of image signal values which succeed the selected television signal value, wherein it is determined that
        the modified television signal value (m(x)) is the peaking filter signal value (f(x)) corresponding to the selected television signal value (s(x)) if the peaking filter signal value (f(x)) lies within an interval predefined by the first and second local extrema (el(x), er(x)),
        and that
        the modified television signal value (m(x)) is the value of the first or second local extremum (el(x), er(x)) if the filter signal value (f(x)) lies outside an interval predefined by the first and second local extrema (el(x), er(x)).

2. The method according to claim 1,
wherein the modified television signal value (m(x)) is the value of the first or second local extremum (el(x), er(x)) which in terms of its absolute value is closer to the corresponding filter signal value (f(x)).

3. The method according to any of the preceding claims,
wherein the length of the sequences of the television signal values (s(k)), within which the first and second local extrema (el(x), er(x)) are determined, is limited.

4. The method according to claim 3,
wherein the sequences within which the first local extremum (el(x)) and the second local extremum (er(x)) are determined, comprise an equal number of television signal values.

5. The method according to claim 3 or 4,
wherein the sequences within which the first local extremum (el(x)) and the second local extremum (er(x)) are determined, comprise four television signal values each.

6. The method according to any of the preceding claims,
wherein the filter signal (f(k)) is formed by raising selected frequency components from the time-discrete television signal (s(k)).

7. A device for enhancing the sharpness of a television image formed of at least one image signal (s(t)), comprising the following features:

    - a sampling device for providing a time-discrete image signal (s(k)) from the image signal (s(t)),
    - a memory arrangement (SR) for storing a sequence of successive signal values (s(x-4)...s(x+4)) of the time-discrete image signal (s(k)),
    - a filtering arrangement (PF) for providing a time-discrete peaking filter signal (f(k)) from the time-discrete image signal (s(k)),
    - an arrangement (10; 12, MUXL, MUXR) for determining first and second local extrema (el(x), er(x)) of the stored sequence of signal values (s(x-4)...s(x+4)) of the time-discrete image signal (s(k)),
    - an arrangement (20) for providing a modified signal value (m(x)) depending on the determined first and second local extrema (el(x), er(x)) and a signal value (f(x)) of the time-discrete peaking filter signal (f(k)), which corresponds to a selected signal value (s(x)) of the time-discrete image signal (s(k)) such that
    - the signal value (s(x)) of the time-discrete image signal (s(k)) is output as a modified signal value (m(x)) if the value of the first local extremum (el(x)) is equal to the value of the second local extremum (er(x)),
    - the modified signal value (m(x)) is generated on the basis of an evaluation of the determined first and second local extrema (el(x), er(x)) and the signal value (f(x)) of the time-discrete peaking filter signal (f(k)), which corresponds to the selected signal value (s(x)) if the value of the first local extremum (el(x)) is not equal to the value of the second local extremum (er(x)).

8. The device according to claim 7,
wherein the arrangement (12, MUXL, MUXR) for determining the first and second local extrema (el(x), er(x)) comprises an arrangement (12) for determining a relative position (pl(x), pr(x)) of the first and second local extrema (el (x), er(x)) with respect to the selected signal value (s(x)) of the time-discrete image signal (s(k)) and at least one multiplexer (MUXL, MUXR) which is fed with the relative position (pl(x), pr(x)) of the first and second local extrema and with the stored sequence of successive signal values of the time-discrete image signal.

**Revendications**

1. Procédé de raidissement de transitions de signal dans une image de télévision formée à partir d'au moins un signal d'image (s(t)), le procédé présentant les caractéristiques suivantes :

    - création d'un signal d'image à temps discret (s(k)) présentant une séquence de valeurs de signal d'image à partir du signal d'image (s(t)),
    - création d'un signal filtré par correction à temps discret (f(k)) présentant une suite de valeurs de signal pour le signal d'image à temps discret (s(k)), le signal filtré par correction à temps discret (f(k)) présentant des valeurs de signal (f(x)) correspondant respectivement aux valeurs de signal d'image (s(x)),
    - création d'un signal d'image modifié (m(k)) présentant une suite de valeurs de signal modifiées à partir du signal d'image à temps discret (s(k)) et du signal filtré par correction (f(k)),
    **caractérisé en ce que**
    la création de la valeur de signal modifiée (m(x)) du signal d'image modifié (m(k)) présente les étapes de procédé suivantes :
    - sélection d'une valeur de signal (s(x)) du signal d'image (s(k)),
    - si la valeur de signal sélectionnée (s(x)) constitue un extrémum local, sortie de la valeur de signal sélectionnée (s(x)) comme valeur de signal modifiée (m (x) ),
    - si la valeur de signal sélectionnée (s(x)) ne constitue pas un extrémum local,
    - détermination, en partant de la valeur de signal d'image sélectionnée (s(x)), d'un premier extrémum local (el (x)) à partir d'une suite de valeurs de signal d'image antérieures à la valeur de signal d'image sélectionnée et d'un deuxième extrémum local (er(x)) à partir d'une suite de valeurs de signal d'image postérieures à la valeur de signal de télévision sélectionnée, où l'on définit que la valeur de signal de télévision modifiée (s(x)) est la valeur de signal filtré par correction (f(x)) correspondant à la valeur de signal de télévision sélectionnée (s(x)) si la valeur de signal filtré par correction (f(x)) est comprise dans un intervalle défini par le premier et deuxième extrémum local (el(x), er(x)), et que

la valeur de signal de télévision modifiée (m(x)) est la valeur du premier ou deuxième extrémum local (el(x), er(x)) si la valeur de signal filtré (f(x)) est située en dehors d'un intervalle défini par le premier et deuxième extrémum local (el(x), er(x)).

2.  Procédé selon la revendication 1, où la valeur de signal de télévision modifiée (m(x)) est la valeur du premier ou deuxième extrémum local (el(x), er(x)) qui est numériquement plus proche de la valeur de signal filtré correspondante (f(x)).

3.  Procédé selon l'une des revendications précédentes, où la longueur des suites de valeurs de signal de télévision (s(k)) à l'intérieur desquelles le premier et deuxième extrémum local (el(x), er(x)) sont déterminés, est limitée.

4.  Procédé selon la revendication 3, où les suites à l'intérieur desquelles le premier extrémum local (el(x)) et le deuxième extrémum local (er(x)) sont déterminés, présentent le même nombre de valeurs de signal de télévision.

5.  Procédé selon la revendication 3 ou 4, où les suites à l'intérieur desquelles le premier extrémum local (el(x)) et le deuxième extrémum local (er(x)) sont déterminés, comportent chacune quatre valeurs de signal de télévision.

6.  Procédé selon l'une des revendications précédentes, où le signal filtré (f(k)) est formé par relèvement de composantes sélectionnées de fréquence à partir du signal de télévision à temps discret (s(k)).

7.  Dispositif d'accroissement de la netteté d'une image de télévision formée à partir d'au moins un signal d'image (s(t)), présentant les caractéristiques suivantes :

    - un dispositif de balayage destiné à fournir un signal d'image à temps discret (s(k)) à partir du signal d'image (s(t)),
    - un dispositif de mémoire (SR) destiné à mémoriser une suite de valeurs de signal consécutives (s(x-4)...s(x+4)) du signal d'image à temps discret (s (k)) ,
    - un dispositif de filtrage (PF) destiné à fournir un signal filtré par correction à temps discret (f(k)) à partir du signal d'image à temps discret (s(k)),
    - un dispositif (10 ; 12, MUXL, MUXR) destiné à déterminer un premier et deuxième extrémum local (el(x), er(x)) de la suite mémorisée de valeurs de signal (s(x-4)...s(x+4)) du signal d'image à temps discret (s(k)),
    - un dispositif (20) destiné à fournir une valeur de signal modifiée (m(x)) en fonction du premier et deuxième extrémum local déterminé (el(x), er(x)) et d'une valeur de signal (f(x)) du signal filtré par correction à temps discret (f(k)) correspondant à une valeur de signal sélectionnée (s(x)) du signal d'image à temps discret (s (k) ) de telle manière que

        - la valeur de signal (s(x)) du signal d'image à temps discret (s(k)) soit émise comme valeur de signal modifiée (m(x)) si la valeur du premier extrémum local (el(x)) équivaut à la valeur du deuxième extrémum local (er(x)),
        - la valeur de signal modifiée (m(x)) soit créée sur la base d'une évaluation du premier et deuxième extrémum local déterminé (el(x), er(x)) et de la valeur de signal (f(x)) du signal filtré par correction à temps discret (f(k)) correspondant à la valeur de signal sélectionnée (s(x)) si la valeur du premier extrémum local (el(x)) n' équivaut pas à la valeur du deuxième extrémum local (er(x)).

8.  Dispositif selon la revendication 7, où le dispositif (12, MUXL, MUXR) destiné à déterminer le premier et deuxième extrémum local (el(x), er(x)) présente un dispositif (12) destiné à déterminer une position relative (pl(x), pr(x)) du premier et deuxième extrémum local (el(x), er(x)) par rapport à la valeur de signal sélectionnée (s(x)) du signal d'image à temps discret (s(k)) et au moins un multiplexeur (MUXL, MUXR) auquel sont envoyés la position relative (pl(x), pr(x)) du premier et deuxième extrémum local et la suite mémorisée de valeurs de signal consécutives du signal d'image à temps discret.

# FIG 1

$S1(k)$

$\longrightarrow K$

$S2(k)$

$\longrightarrow K$

Median

$S3(k)$

$Ko-2$  $Ko$    $Ko+2$

$\longrightarrow K$

# FIG 3

f(k3)

f(k2)
m(k2)'

er(k3)

S(k3)

er(k1)

S(k1)

el(k1)

S(k2)

el(k3)

S(k2)

el(k2)

I         II        III

f(k1)

● f(k)
◉ m(k)
○ S(k)

$k$

# FIG 2

EP 1 246 452 B1

# FIG 4

# FIG 5

FIG 6 a

FIG 6 b

FIG 6 c

FIG 6 d

FIG 6 e

FIG 6 f

# FIG 7

s(k)

x+c

k

s(k)

x+c-1    x+c    x+c+1    k

s(k)

x+c-1    x+c    x+c+1    k

s(k)

x+c-1    x+c    x+c+1    k

# FIG 8

FIG 9a

$el(x) = s(x-3)$
$er(x) = s(x+2)$

FIG 9b

$el(x) = s(x-4)$
$er(x) = s(x+4)$

EP 1 246 452 B1

# FIG 10

FIG 11

EP 1 246 452 B1

**EP 1 246 452 B1**

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0224302 A1
- EP 0457931 A1
- EP 0558017 A2

### In der Beschreibung aufgeführte Nicht-Patentliteratur

- **Ohara ; Kunzmann.** Video Processing Technique for Multimedia HDTV with Digital Micro-Mirror Array. *IEEE Transactions on Consumer Electronics,* vol. 45 (3), 604ff